# EUROPÄISCHE PATENTSCHRIFT

(11) **EP 0 337 524 B1**
(45) Veröffentlichungstag und Bekanntmachung des Hinweises auf die Patenterteilung: **04.08.1993**
(21) Anmeldenummer: 89200594.3
(22) Anmeldetag: 09.03.1989
(51) Int. Cl.: H04M 3/56, H04M 3/24

(54) **Vorrichtung zur Überprüfung der konferenzbildenden Funktionseinheiten einer digitalen Vermittlungsanlage**
Device for testing the conference establishing units in a digital exchange
Dispositif de test des unités d'établissement de conférences dans un central numérique

(30) Priorität: 15.03.1988 DE 3808515
(43) Veröffentlichungstag der Anmeldung: 18.10.1989
(73) Patentinhaber: Philips Patentverwaltung GmbH, 22335 Hamburg (DE); Philips Electronics N.V., 5621 BA Eindhoven (NL)
(72) Erfinder: Hessler, Peter, Dipl.-Ing., D-8520 Erlangen (DE); Schmidt, Manfred, Dipl.-Ing., D-8740 Salz (DE); Selbach, Bernd, Dipl.-Ing., D-8501 Eckental (DE)
(74) Vertreter: Peuckert, Hermann, Dipl.-Ing.

(56) Entgegenhaltungen:
- US-A- 4 466 092
- PATENT ABSTRACTS OF JAPAN, Band 9, Nr. 102 (E-312)[1825], 4. Mai 1985 & JP-A-59 229 962
- PATENT ABSTRACTS OF JAPAN, Band 12, Nr. 80 (E-590)[2927], 12. März 1988 & JP-A-62 217 757

## Beschreibung

Die Erfindung betrifft eine Vorrichtung zur Überprüfung der konferenzbildenden Funktionseinheiten einer digitalen Vermittlungsanlage mit einem Zentralvermittlungssystem, das aus einem Zentralsteuerwerk sowie Vermittlungsmoduln besteht.

Aus der DE 29 05 426 C2 ist ein Verfahren zur Prüfung der Funktionsfähigkeit von im Zusammenhang mit der Herstellung von Konferenzverbindungen ausgenutzten Sprachspeichern und übrigen Einrichtungen einer PCM-Zeitmultiplex-Vermittlungseinheit bekannt. Einleitend werden in dieser Druckschrift mehrere Schaltungsanordnungen von konferenzbildenden Funktionseinheiten vorgestellt und deren Fundstellen angegeben. Dem Fachmann sind daher konferenzbildende Funktionseinheiten und deren Wirkungsweise bekannt. Das in der DE 29 05 426 C2 vorgeschlagene Verfahren sieht vor, Prüfcodeworte von der zentralen Steuerung der PCM-Zeitmultiplex-Vermittlungseinheit auszusenden und dort wieder zu empfangen. Damit wird die zentrale Steuerung - hier Zentralsteuerwerk genannt - zusätzlich mit der Überprüfung der konferenzbildenden Funktionseinheiten belastet. Im vorliegenden Zusammenhang wird derjenige Teil einer digitalen Vermittlungsanlage, der im wesentlichen aus dem Zentralsteuerwerk sowie den Vermittlungsmoduln besteht, Zentralvermittlungssystem genannt.

Der Erfindung liegt die Aufgabe zugrunde, das Zentralsteuerwerk einer digitalen Vermittlungsanlage von Prüfungsaufgaben zu entlasten und ihm allein, zusammen mit den Vermittlungsmodulen, hauptsächlich die Signalwegeschaltung zu überlassen.

Die gestellte Aufgabe wird durch folgende Mittel gelöst:
1.1. Einen dezentralen Steuerungsmodul, der über Signal-und Steuerleitungen sowohl mit den konferenzbildenden Funktionseinheiten als auch mit dem Zentralvermittlungssystem verbunden ist,
1.2. erste Gesprächsleitungen für N Zeitkanäle, die die Gesprächsdaten von maximal N Konferenzteilnehmern vom Zentralvermittlungssystem über den dezentralen Steuerungsmodul an die konferenzbildenden Funktionseinheiten leiten, sowie zweite Gesprächsleitungen für N Zeitkanäle, über die das Konferenzsignal für maximal N Konferenzteilnehmer von den konferenzbildenden Funktionseinheiten über den dezentralen Steuerungsmodul an das Zentralvermittlungssystem geleitet wird,
1.3. Steuer- und Prüfbefehle, die vom Zentralvermittlungssystem an den dezentralen Steuerungsmodul übertragen werden und diesen dazu veranlassen, Testdaten über eine erste Gesprächsleitung an die konferenzbildenden Funktionseinheiten zu übertragen, die verarbeiteten Testdaten über eine zweite Gesprächsleitung zu empfangen, zu bewerten und im Fehlerfall ein Alarmsignal über eine Signal-und Steuerleitung an das Zentralvermittlungssystem zu übertragen.

Eine erste vorteilhafte Ausgestaltung besteht darin, daß die Testdaten bzw. die verarbeiteten Testdaten über diejenigen K Zeitkanäle gesendet bzw. empfangen werden, die zum Zeitpunkt des Eingangs eines Prüfbefehls nicht für Konferenzteilnehmer belegt sind, wobei K kleiner oder gleich N ist. Teile der konferenzbildenden Funktionseinheiten können somit fast jederzeit getestet werden.

Eine weitere Ausgestaltung besteht darin, daß für L der K Zeitkanäle die Testdaten aus einem Ruhesignal bestehen, wobei L kleiner als K ist. Diese Wahl der Testdaten eröffnet die Möglichkeit eines überschaubaren Verarbeitungsergebnisses durch die konferenzbildenden Einheiten bei fehlerfreiem Betrieb.

Nach einer dritten Ausgestaltung bestehen die Testdaten für jeden der K - L Zeitkanäle, die nicht mit einem Ruhesignal beaufschlagt werden, aus einer Folge gleicher Codeworte. Das Verarbeitungsergebnis ist bei dieser Wahl der Testdaten zeitlich konstant; es kann bei fehlerfreiem Betrieb höchstens K - L + 1 zeitlich konstante Werte haben.

Weitere Ausgestaltungen sehen vor, diese Folge von Codeworten auch aus unterschiedlichen Codeworten bestehen zu lassen, z.B. aus Codeworten, die eine Sinusschwingung darstellen. Dabei ist jedoch darauf zu achten, daß die Frequenz dieser Sinusschwingung so gewählt ist, daß sie im Sprachband liegt, d.h., daß sie im Durchlaßbereich aller Filter liegt, die in den konferenzbildenden Funktionseinheiten enthalten sind. Mit dieser Wahl der Testdaten ist die Filterwirkung der konferenzbildenden Funktionseinheiten überprüfbar.

Erheblicher Rechenaufwand läßt sich dadurch vermeiden, daß die Sollwerte der durch die konferenzbildenden Funktionseinheiten verarbeiteten Testsignale in einem Speicher des dezentralen Steuerungsmoduls gespeichert sind. Das Verarbeitungsergebnis muß also nicht bei jedem Test neu berechnet werden; daher braucht bei einer Schaltung nach der Erfindung die Wirkungsweise ordnungsgemäß arbeitender konferenzbildender Funktionseinheiten auf bestimmte Testdaten nicht bekannt zu sein. Es reicht die Kenntnis des Ergebnisses.

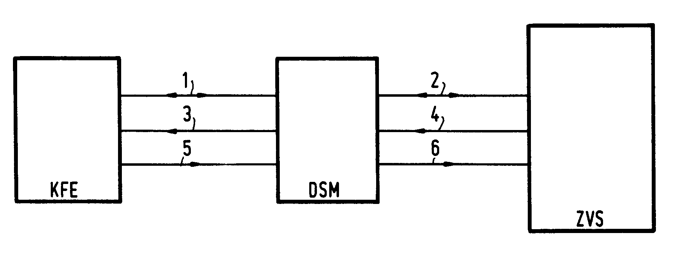

Anhand der Figur und anhand eines Ausführungsbeispieles soll die Erfindung näher erläutert werden.

Die Figur zeigt ein Blockschaltbild einer erfindungsgemäßen Vorrichtung.

Die abgebildete digitale Vermittlungsanlage besteht aus einem Zentralvermittlungssystem ZVS, das im wesentlichen ein Zentralsteuerwerk sowie Vermittlungsmodule enthält. Die Hauptaufgabe des Zentralsteuerwerkes sowie der Vermittlungsmoduln besteht in der Signalwegeschaltung. Die Sprachsignale derjenigen Teilnehmer, die eine Konferenzschaltung wünschen, wird als Multiplexsignal vom zentralen Vermittlungssystem über eine Leitung 4 an einen dezentralen Steuerungsmodul DSM übertragen. Sie werden in dem Fall, daß der dezentrale Steuerungsmodul DSM konferenzbildende Funktionseinheiten KFE der Vermittlungsanlage nicht testet über eine Leitung 3 an die konferenzbildenden Funktionseinheiten KFE weitergegeben. Zugehörige Steuersignale, wie z.B. die Anzahl der Konferenzteilnehmer, laufen über Leitungen 2 und 1.

Die Maximalzahl der Konferenzteilnehmer ist im vorliegenden Beispiel 32 (N = 32). Dabei können jeweils bis zu 8 Teilnehmer eine Konferenz unter sich durchführen. Die konferenzbildenden Einheiten KFE fassen bis zu 8 Sprachsignale zu einem Konferenzsignal zusammen und senden auf einer Leitung 5 in den vorgesehenen Zeitkanälen das Konferenzsignal, das sich im wesentlichen aus der gewichteten Summe der Einzelsignale zusammensetzt, an den dezentralen Steuerungsmodul DSM. Er leitet das Konferenzsignal über eine Leitung 6 an das Zentralvermittlungssystem ZVS, das dann an jeden der Konferenzteilnehmer das für ihn vorgesehene Konferenzsignal überträgt.

Von Zeit zu Zeit übermittelt das Zentralvermittlungssys-tem ZVS Steuer- und Prüfbefehle über die Leitung 2 an den dezentralen Steuerungsmodul DSM. Der Steuerungsmodul DSM überträgt dann über die freien Zeitkanäle der Leitung 3 Testsignale an die konferenzbildenden Einheiten KFE, die von diesen wie Sprachsignale zu Konferenzsignalen verarbeitet und auf der Leitung 5 in die Gegenrichtung übertragen werden. Die verarbeiteten Testsignale werden nicht über die Leitung 6 an das Zentralvermittlungssystem ZVS weitergeleitet, sondern von dem dezentralen Steuermodul DSM ausgewertet.

Die Testsignale bestehen aus einer digital codierten Sinusschwingung, die im vorliegenden Beispiel über einen (K -L =1) freien Kanal der Leitung 3 übertragen wird, während alle anderen freien Kanäle vom dezentralen Steuermodul DSM mit Ruhesignalen beaufschlagt werden. Die zeitdiskreten Werte einer Periode der Sinusschwingung sind in einem Speicher des dezentralen Steuermoduls DM gespeichert und werden aus ihm wiederholt ausgelesen; diese Werte sind nach einer nichtlinearen PCM-Codierungskennlinie codiert worden. Die Frequenz der Sinusschwingung liegt im Sprachbandbereich.

Auf der Leitung 5 ergibt sich dann - bei ordnungsgemäßem Betrieb - für den einen Kanal ein Ruhesignal, für alle anderen die Sinusschwingung. Die Schwingung wird Wert für Wert und Kanal für Kanal - unter Berücksichtigung der Zeitverzögerung über die konferenzbildenden Einheiten KFE - mit den ausgesendeten Werten verglichen. Stimmen die vom dezentralen Steuerungsmodul DMS empfangenen Werte mit den ausgesendeten überein, so wird über die Leitung 2 ein Signal entsprechenden Inhaltes an das Zentralvermittlungssystem ZVS übertragen, anderenfalls ein Alarmsignal.

## Patentansprüche

1. Vorrichtung zur Überprüfung der konferenzbildenden Funktionseinheiten (KFE) einer digitalen Vermittlungsanlage mit einem Zentralvermittlungssystem (ZVS), das aus einem Zentralsteuerwerk sowie Vermittlungsmoduln besteht,
gekennzeichnet durch:
1.1. einen dezentralen Steuerungsmodul (DSM), der über Signal- und Steuerleitungen (1, 2) sowohl mit den konferenzbildenden Funktionseinheiten (KFE) als auch mit dem Zentralvermittlungssystem (ZVS) verbunden ist,
1.2. erste Gesprächsleitungen (3, 4) für N Zeitkanäle, die die Gesprächsdaten von maximal N Konferenzteilnehmern vom Zentralvermittlungssystem (ZVS) über den dezentralen Steuerungsmodul (DSM) an die konferenzbildenden Funktionseinheiten (KFE) leiten, sowie zweite Gesprächsleitungen (5, 6) für N Zeitkanäle, über die ein Konferenzsignal für maximal N Konferenzteilnehmer von den konferenzbildenden Funktionseinheiten (KFE) über den dezentralen Steuerungsmodul (DSM) an das Zentralvermittlungssystem (ZVS) geleitet wird,
1.3. Steuer- und Prüfbefehle, die vom Zentralvermittlungssystem (ZVS) an den dezentralen Steuerungsmodul (DSM) übertragen werden und diesen dazu veranlassen, Testdaten über eine erste Gesprächsleitung (3) an die konferenzbildenden Funktionseinheiten (KFE) zu übertragen, die verarbeiteten Testdaten über eine zweite Gesprächsleitung (5) zu empfangen, zu bewerten und im Fehlerfall ein Alarmsignal über eine Signal- und Steuerleitung (2) an das Zentralvermittlungssystem (ZVS) zu übertragen.

2. Vorrichtung nach Anspruch 1,
dadurch gekennzeichnet,
daß die Testdaten bzw. die verarbeiteten Testdaten über diejenigen K Zeitkanäle gesendet bzw. empfangen werden, die zum Zeitpunkt des Eingangs eines Prüfbefehles nicht für Konferenzteilnehmer belegt sind, wobei K kleiner oder gleich N ist.

3. Vorrichtung nach Anspruch 2,
dadurch gekennzeichnet,
daß für L der K Zeitkanäle die Testdaten aus einem Ruhesignal bestehen, wobei L kleiner als K ist.

4. Vorrichtung nach Anspruch 3,
dadurch gekennzeichnet,
daß die Testdaten für jeden der K - L Zeitkanäle, die nicht mit einem Ruhesignal beaufschlagt werden, aus einer Folge gleicher Codeworte bestehen.

5. Vorrichtung nach Anspruch 3,
dadurch gekennzeichnet,
daß die Testdaten für jeden der K - L Zeitkanäle, die nicht mit einem Ruhesignal beaufschlagt werden, aus einer Folge unterschiedlicher Codeworte bestehen.

6. Vorrichtung nach Anspruch 5,
dadurch gekennzeichnet,
daß die Folge unterschiedlicher Codeworte die aufeinanderfolgenden Werte einer Sinusschwingung darstellen, deren Frequenz so gewählt ist, daß sie im Durchlaßbereich aller in den konferenzbildenden Funktionseinheiten (KFE) enthaltenen Filter liegen.

7. Vorrichtung nach einem der vorhergehenden Ansprüche,
dadurch gekennzeichnet,
daß die Sollwerte der durch die konferenzbildenden Funktionseinheiten (KFE) verarbeiteten Testsignale in einem Speicher des dezentralen Steuerungsmodul (DSM) gespeichert sind.

## Claims

1. Device for testing the operating units (KFE) forming a conference circuit in a digital exchange having a central switching system (ZVS), comprising a central controller as well as switching modules, characterized by:
1.1 a decentralized control module (DSM), which is connected to the operating units (KFE) forming the conference circuit and to the central switching system (ZVS) via signal and control lines (1, 2),
1.2 first communication lines (3, 4) for N time slots, transmitting the speech data of a maximum number of N conferees from the central switching system (ZVS), via the decentralized control module (DSM), to the operating units (KFE) forming the conference circuit, as well as second communication lines (5, 6) for N time slots, through which the conference signals for a maximum number of N conferees are transmitted from the operating units (KFE) forming the conference circuit to the central switching system (ZVS) via the decentralized control mode (DSM),
1.3 control and test commands, which are transmitted from the central switching system (ZVS) to the decentralized control module (DSM) and cause the latter to transmit test data, via a first communication line (3), to the operating units (KFE) forming the conference circuit to receive the processed test data via a second communication line (5), to evaluate them and in the case of an error signal to transmit an alarm signal to the central switching system (ZVS) via a signal and control line (2).

2. Device as claimed in Claim 1, characterized in that the test data and processed test data respectively, are transmitted and received respectively, via the K time slots which are not occupied by conferees at the moment when a test command is given, K being smaller than or equal to N.

3. Device as claimed in Claim 2, characterized in that for L of the K time slots the test data consist of a rest signal, where L is an integer smaller than K.

4. Device as claimed in Claim 3, characterized in that the test data for each of the K - L time slots, in which a test signal does not occur, consist of a sequence of identical code words.

5. Device as claimed in Claim 3, characterised in that the test data for each of the K - L time slots, in which a rest signal does not occur, consist of a sequence of different code words.

6. Device as claimed in Claim 5, characterized in that the sequence of different code words represent successive values of a sinusoidal wave, whose frequency is selected such that it is situated in the passband of all the filters contained in the operating units (KFE) forming the conference circuit.

7. Device as claimed in one of the preceding Claims, characterized in that the nominal values of the test signals processed by the operating units (KFE) forming the conference circuit are stored in a memory of the decentralized control module (DSM).

## Revendications

1. Dispositif pour contrôler les unités fonctionnelles d'établissement de conférences (KFE) d'un centre de commutation numérique comportant un système de commutation central (ZVS) qui est constitué d'une unité de commande centrale ainsi que de modules de commutation, caractérisé par :
1.1.- un module de commande décentralisé (DSM) qui est relié via des lignes d'acheminement de signaux et de commande (1, 2) à la fois aux unités fonctionnelles d'établissement de conférences (KFE) et au système de commutation central (ZVS),
1.2.- des premières lignes de conversation (3, 4) pour N canaux de temps qui acheminent les données de conversation au maximum de N participants à la conférence, à partir du système de commutation central (ZVS) via le module de commande décentralisé (DSM) aux unités fonctionnelles d'établissement de conférences (KFE), ainsi que des secondes lignes de conversation (5, 6) pour N canaux de temps par l'intermédiaire desquels un signal de conférence pour au maximum N participants à la conférence sont acheminés depuis les unités fonctionnelles d'établissement de conférences (KFE) via le module de commande décentralisé (DSM) au système de commutation central (ZVS),
1.3.- des ordres de commande et de contrôle qui sont transmis depuis le système de commutation central (ZVS) au module de commande décentralisé (DSM) et qui incitent ce dernier à transmettre des données de test via une première ligne de conversation (3) aux unités fonctionnelles d'établissement de conférences (KFE), à recevoir les données de test traitées via une seconde ligne de conversation (5), à les évaluer et à transmettre, en cas de défaut, un signal d'alarme via une ligne d'acheminement de signaux et de commande (2) au système de commutation central (ZVS).

2. Dispositif suivant la revendication 1, caractérisé en ce que les données de test et les données de test traitées sont émises et reçues via les K canaux de temps qui, au moment de l'entrée d'un ordre de contrôle, ne sont pas occupés pour des participants à la conférence, K état plus petit ou égal à N.

3. Dispositif suivant la revendication 2, caractérisé en ce que pour L des K canaux de temps, les données de test sont formées d'un signal de repos, où L est plus petit que K.

4. Dispositif suivant la revendication 3, caractérisé en ce que les données de test pour chacun des K - L canaux de temps qui ne sont pas alimentés par un signal de repos, sont constitués d'une succession de mots de code identiques.

5. Dispositif suivant la revendication 3, caractérisé en ce que les données de test pour chacun des K - L canaux de temps qui ne sont pas alimentés par un signal de repos, sont constituées d'une succession de mots de code différents.

6. Dispositif suivant la revendication 5 caractérisé en ce que la succession de mots de code différents représente les valeurs successives d'une oscillation sinusoïdale dont la fréquence est choisie telle qu'elle soit située dans le domaine passant de tous les filtres contenus dans les unités fonctionnelles d'établissement de conférences (KFE).

7. Dispositif suivant l'une quelconque des revendications précédentes, caractérisé en ce que les valeurs de consignes des signaux de test traités par les unités fonctionnelles d'établissement de conférences (KFE) sont stockées dans une mémoire du module de commande décentralisé (DSM).
